# EUROPÄISCHE PATENTSCHRIFT

(11) **EP 0 458 021 B1**
(45) Veröffentlichungstag und Bekanntmachung des Hinweises auf die Patenterteilung: **08.09.1993**
(21) Anmeldenummer: 91103573.1
(22) Anmeldetag: 08.03.1991
(51) Int. Cl.: B65G 1/04, B66F 9/075

(54) **Regallager für in selbsttragenden Kassetten aufgenommenes Material**
Shelf storage for material contained in self-supporting cassettes
Entrepôt avec rayonnages pour matériel recueilli dans des cassettes autoporteuses

(30) Priorität: 25.05.1990 DE 4016810
(43) Veröffentlichungstag der Anmeldung: 27.11.1991
(73) Patentinhaber: KEURO MASCHINENBAU GMBH & CO. KG, D-77855 Achern (DE)
(72) Erfinder: Zäh, Horst, W-7602 Oberkirch (DE)
(74) Vertreter: Lemcke, Rupert, Dipl.-Ing.

## Beschreibung

Die Erfindung betrifft ein Regallager für in selbsttragenden Kassetten aufgenommes, stangen- oder plattenförmiges Material mit mehreren quer zur Materiallängsrichtung fluchtend nebeneinander angeordneten und durch Regalgänge voneinander getrennten Regalen, die übereinander an vertikalen Regalstützen befestigte, sich horizontal quer zur Materiallängsrichtung in den benachbarten Regalgang erstreckende Tragarme zur Bildung von Regalfächern für die Kassetten und dazu für den Eingriff in stirnseits vorstehende Auflagen der Kassetten aufweisen, ferner mit einem oberhalb bzw. seitlich der Regale quer zur Materiallängsrichtung verfahrbaren Regalbediengerät, durch das die Auflagen der Kassetten stirnseitig untergreifbar sowie die Kassetten quer zu den Regalgängen und in diesen auf- und abbewegbar sind, weiterhin mit einem unterhalb der untersten Regalfächer quer zur Materiallängsrichtung verfahrbaren Transportwagen mit wenigstens zwei nebeneinander angeordneten Aufnahmeplätzen für die Kassetten, sowie schließlich mit mindestens einer in Fahrtrichtung des Transportwagens außerhalb der Regale angeordneten und durch den Transportwagen mit den Kassetten anfahrbaren Station zum Ein- und Auslagern für das in den Kassetten enthaltene Material, wobei diese Station eine erste, dem Niveau des Transportwagens im wesentlichen entsprechende Aufnahmeebene zum Wechsel der Kassetten zwischen Transportwagen und Station zum Ein- und Auslagern aufweist.

Eine solche Einrichtung ist Gegenstand der älteren deutschen Patentanmeldung P 39 22 964.5, die in Verbesserung des Gegenstandes der DE-OS 37 08 401 eine Möglichkeit angibt, wie der Wechsel zwischen einer in das Regallager einzulagernden Kassette einerseits und einer aus dem Regallager nächstfolgend herauszubringenden Kassetten andererseits schneller erfolgen kann. Dazu können die Kassetten auf dem Transportwagen während dessen Fahrt zwischen Auslagerstation und Regallagerdurch entsprechende Mittel umgesetzt werden, damit bei einem einzigen Treffpunkt zwischen Transportwagen und Regalbediengerät sowohl die nächstfolgende Kassette auf dem Transportwagen abgesetzt werden kann als auch die zurückgebrachte Kassette vom Transportwagen abgenommen werden kann, um dann an den Platz innerhalb des Regallagers gebracht zu werden, von dem die nächstfolgend aus dem Regallager herauszubringende Kassette entnommen wurde. Damit verbindet sich zwar eine chaotische Lagerung der Kassetten, die jedoch zu einer Reduzierung der für den Kassettenwechsel erforderlichen Fahrzeiten bzw. -bewegungen von Transportwagen einerseits und Regalbediengerät andererseits auf ein absolutes Minimum führt mit der Folge, daß beide genannten Einrichtungen nicht nur im Zuge des Kassettenwechsels innerhalb der ohnehin notwendigen Fahrbewegungen glatt bzw. harmonisch miteinander spielen sondern auch in Begleitung des Kassettenwechsels nur solche Fahrbewegungen ausführen, die ohnehin notwendig sind.

Im Falle der älteren Anmeldung bzw. im vorbekannten Falle ist die Station zum Ein- und Auslagern bzw. zum Weiterverarbeiten des in den Kassetten enthaltenen Materials in Längsrichtung des Materials neben dem Regallager angeordnet, so daß die Kassetten vom Transportwagen in Längsrichtung des Materials beispielsweise mit Hilfe einer Rollenbahn auf diese Station herausgefahren werden. Soll jedoch das Regallager mehrere in Längsrichtung des Materials dicht nebeneinander liegende Blöcke aufweisen, so besteht die Möglichkeit für eine derartige Station nur für eine äußere Regalreihe, während für die anderen Regalreihen ein Ausfahren der Kassetten nur über die quer zur Materiallängsrichtung gelegenen Stirnseiten der Regalreihen möglich ist.

Hierzu enthält die genannte ältere deutsche Patentanmeldung einen einfachen, stirnseitigen Auslagerplatz, der jedoch nur die Handhabung einer Kassette beispielsweise zum Wiederauffüllen mit neuem Material ermöglicht. Mit einem solchen Auslagerplatz erfordert jedoch das Ein- und Auslagern des Materials verhältnismäßig viel Zeit und ist umständlich.

Aufgabe der Erfindung ist es daher, eine stirnseitige Station zum Ein- und Auslagern für in selbsttragenden Kassetten aufgenommenes Material zu schaffen, die in Verbindung mit dem geschilderten Transportwagen einen schnellen Wechsel zwischen wenigstens zwei Kassetten erlaubt und gegebenenfalls auch die Möglichkeit bietet, daß eine Bedienungsperson ohne Probleme - gegebenenfalls mit Hilfe einer Pufferzone - mehrere Kassetten vorgelagert hat und aus diesen kommissionieren bzw. diese einlagern kann. Insgesamt soll durch die Erfindung die stirnseitige Station zum Ein- und Auslagern so ausgebildet sein, daß die Funktion und Wirkungsweise des Transportwagens beibehalten werden kann und die Spielzeiten sowie die Leistungsfähigkeit des gesamten Regallagers nicht durch diese Station beschränkt wird.

Diese Aufgabe ist ausgehend von dem eingangs genannten Regallager erfindungsgemäß dadurch gelöst, daß die Station zum Ein- und Auslagern zwei übereinander angeordnete Aufnahmeebenen für die Kassetten aufweist, wobei die untere Aufnahmeebene der ersten eingangs genannten Aufnahmeebene entspricht, daß die obere Aufnahmeebene die untere Aufnahmeebene in Richtung auf den Transportwagen um eine Kassettenbreite überragt, daß der Transportwagen auf dem in seiner Fahrtrichtung gegenüber der Station zum Ein-und Auslagern zurückliegenden Aufnahmeplatz eine Hubvorrichtung zur Anhebung der dortigen Kassette auf das Niveau der oberen Aufnahmeebene aufweist, und daß die Aufnahmeebenen sowie der Transportwagen mit Mitteln zum Wechseln der Kassetten zwischen den Aufnahmeebenen und dem Transportwagen ausgerüstet sind.

Durch diese erfindungsgemäßen Maßnahmen kann der Transportwagen bei der Station zum Ein- und Auslagern gleichzeitig mit Hilfe der Hubvorrichtung eine Kassette auf der oberen Aufnahmeebene absetzen und mit seinem in Richtung auf die Station zum Ein- und Auslagern daneben liegenden Aufnahmeplatz eine Kassette von der unteren Aufnahmeebene abnehmen. Dadurch ist auch im Bereich der Station zum Ein- und Auslagern ein zügiger Kassettenwechsel zwischen herauszubringendem Material und wieder in das Regallager zurückzubringenden Material möglich, ohne daß es dazu weiterer Nebenzeiten bzw. Fahrbewegungen des Transportwagens bedürfte.

Im Sinne der Aufgabe ist es zweckmäßig, daß auf den Aufnahmeebenen der Station zum Ein- und Auslagern quer zur Materiallängsrichtung mehrere Kassetten aufnehmbar sind, und daß die Aufnahmeebene Mittel zur Verschiebung der Kassetten quer zur Materiallängsrichtung aufweisen. Damit kann auf beiden Aufnahmeebenen ein größeres Kassettenangebot vorhanden sein, so daß die an der Station zum Ein- und Auslagern tätige Bedienungsperson zumindest kurzfristig nicht auf einen einzelnen Kassettenwechsel zwischen Transportwagen und Station angewiesen ist.

Die Verschiebemittel der Station zum Ein- und Auslagern können durch eine in beiden Drehrichtungen antreibbaren Rollenbahn bzw. entsprechende Rollenbahnabschnitte gebildet sein. Durch eine solche Rollenbahn bzw. die genannten Rollenbahnabschnitte lassen sich die Kassetten quer zur Längsrichtung des Materials stückweise an den Arbeitsplatz der Bedienungsperson verschieben bzw. wieder von diesem fortbewegen. Diese Vorgehensweise kann die Bedienungsperson durch Ein- bzw. Ausschalten der Rollenbahn selbst je nach Arbeitslage bestimmen.

Alternativ zu Rollenbahnen können selbstverständlich auch andere Mittel zur Verschiebung der Kassetten quer zur Längserstreckung des Materials Einsatz finden. Beispielsweise kann es in diesem Zusammenhang auch vorteilhaft sein, daß die Verschiebemittel durch eine in beiden Richtungen quer zur Materiallängsrichtung antreibbaren Vorrichtung nach Art eines Kettenförderers bzw. entsprechender Kettenfördererabschnitte gebildet sind.

Ebenso kommen hier Hubbalkenförderer, Stauförderer, Schleppketten oder dergleichen in Frage.

Zum Wechsel der Kassetten zwischen den beiden Aufnahmeebenen der Station zum Ein- und Auslagern ist es vorteilhaft, daß an dem dem Transportwagen abgewandten Ende der Aufnahmeebenen der letzte Kassettenplatz durch einen beiden Ebenen gemeinsamen, vertikal fahrbaren Aufzug zum Wechseln der Kassetten zwischen den beiden Ebenen gebildet ist. Die Betätigung dieses Aufzugs ist unabhängig von den Fahrbewegungen des Transportwagens und kann von der Bedienungsperson im Rahmen des Ein- und Auslagerns je nach Arbeitslage erfolgen.

Was die passende Ausbildung des Transportwagens betrifft, so ist es zweckmäßig, daß die Hubvorrichtung des Transportwagens in beiden Richtungen drehantreibbare Rollen zum Kassettenwechsel zwischen Hubvorrichtung und oberer Aufnahmeebene bzw. gegenüber einem benachbarten Aufnahmeplatz des Transportwagens aufweist. Dabei kann die Hubvorrichtung eine im wesentlichen der Außenkontur des Aufnahmeplatzes des Transportwagens entsprechende, sich horizontal erstreckende Aufnahme aufweisen, die über Hubmittel gegenüber dem Transportwagen heb- und senkbar ist. Hier kann die Aufnahme an ihren den Längsenden der Kassetten zugeordneten Enden die in beiden Drehrichtungen antreibbaren Rollen zum Kassettenwechsel aufweisen.

Was die Ausbildung der Hubvorrichtung betrifft, so kann diese bzw. die genannte Aufnahme über verstellbare Scherenhebel am Transportwagen vertikal verstellbar angelenkt sein, wobei die Vertikalverstellung der Scherenhebel in an sich bekannter Weise, beispielsweise über Zylinder-Kolben-Aggregate, Stellspindeln oder dergleichen erfolgen kann.

Passend hierzu kann jeder der der Hubvorrichtung benachbarten Aufnahmeplätze des Transportwagens ebenfalls in beiden Richtungen drehantreibbarer Rollen zum Kassettenwechsel aufweisen.

Eine andere Ausbildung des Transportwagens kann so gestaltet sein, daß auf dem Transportwagen eine quer zur Materiallängsrichtung bewegbare Umsetzvorrichtung für die Anhebung und Überbringung einer auf einem Aufnahmeplatz des Transportwagens befindlichen Kassette auf einen anderen Aufnahmeplatz des Transportwagens bzw. zurAbnahme einer Kassette von dem zugeordneten Ende der unteren Aufnahmeebene der Station zum Ein- und Auslagern auf den entsprechenden Aufnahmeplatz des Transportwagens angeordnet ist. Hier ist also die Umsetzvorrichtung das Äquivalent zu den vorerwähnten drehantreibbaren Rollen.

Zur Ausbildung der Umsetzvorrichtung kann vorgesehen sein, daß diese bei den Längsenden der Kassetten zugeordnet je einen entlang äußeren Schienen des Transportwagens verfahrbaren Schlitten zur Aufnahme einer Kassette aufweist. Hier kann vorgesehen sein, daß jeder Schlitten über vertikale, längenveränderbare Ständer mit auf den äußeren Schienen bewegbaren Fahrwerken in Verbindung steht und über Zylinder-Kolben-Aggregate höhenverstellbar ist, die einerseits am Schlitten und andererseits im Bereich der Fahrwerke schwenkbar angelenkt sind.

Dabei kann jeder Schlitten den beiden Stirnseiten an der Kassette zugeordnete Stützwinkel zur Auflagerung und Längs- bzw. Querjustierung der Kassette aufweisen, deren waagerechter Schenkel die Kassette unterfängt, während ihr vertikaler Schenkel in Anlage gegen die Kassettenstirn- bzw. -seitenwand ist.

Der vertikale Schenkel der Stützwinkel kann im Bereich seines freien Endes von der Kassettenstirn- bzw. -seitenwand fortgeneigt abgeschrägt sein, um ein leichteres Ausgleichen eines eventuellen Versatzes der Kassetten zu ermöglichen.

Für den Fall, daß bei einer äußeren Regalreihe auch eine in Materiallängsrichtung neben den Regalen auf der Höhe des Transportwagens angeordnete Ein- und Auslagerstation gegebenenfalls zur gleichzeitigen Aufnahme zweier nebeneinander angeordneter Kassetten vorgesehen werden soll, kann es in Ergänzung der vorstehend angegebenen Bauformen vorteilhaft sein, daß der die Hubvorrichtung aufweisende Aufnahmeplatz des Transportwagens bei abgesenkter Stellung der Hubvorrichtung wirksame Mittel zum Wechsel einer Kassette zwischen Ein- und Auslagerstation und Transportwagen aufweist. Diese Mittel können beispielsweise durch eine in beiden Richtungen drehantreibbare Rollenbahn gebildet sein.

Für die Anwendung dieser Konstruktion ist es zweckmäßig, daß der die Hubvorrichtung aufweisende Aufnahmeplatz zwischen bezogen auf die Materiallängsrichtung gegenüber der Hubvorrichtung außen liegende Fördermittel der oberen Aufnahmeebene von deren den Regalen zugewandten Ende aus einfahrbar ist.

Vorstehend ist jeweils nur eine Station zum Ein- und Auslagern des in den Kassetten enthaltenen Materials angesprochen worden. Selbstverständlich umfaßt die Erfindung aber auch die Möglichkeit, derartige Stationen an beiden Enden des Fahrweges des Transportwagens vorzusehen.

Weitere erfindungswesentliche Merkmale und Einzelheiten ergeben sich aus der nachfolgenden Beschreibung von Ausführungsformen anhand der Zeichnung. In der Zeichnung zeigen:
Fig. 1 die Queransicht eines Regallagers entsprechend der Pfeilrichtung in den Fig. 2 bzw. 3;
Fig. 2 die vereinfachte Vorderansicht des Regallagers gemäß der Pfeilrichtung 11 in Fig. 1 bzw. 3;
Fig. 3 die Oberansicht des Regallagers gemäß der Pfeilrichtung 111 in Fig. 1 bzw. Fig. 2;
Fig. 4 die vergrößerte, teilweise Darstellung des Ausschnittes IV in Fig. 1;
Fig. 5 den Gegenstand gemäß Fig. 4 in einer anderen Arbeitsstellung;
Fig. 6 eine vergrößerte Ansicht des Transportwagens nach Art eines Ausschnittes VI in Fig. 2;
Fig. 7 bis 20 den Ablauf eines Kassettenwechsels mit einem Lastspiel;
Fig. 21 eine andere Ausführungsform des Erfindungsgegenstandes in der Darstellung nach dem Ausschnitt IV gemäß Fig. 1;
Fig. 22 eine Stirnansicht des aus Fig. 21 ersichtlichen Transportwagens nach Art der Ansicht Vl in Fig. 2;
Fig. 23 eine Draufsicht auf eine Einrichtung gemäß Fig. 21 und
Fig. 24 bis 28 einen Kassettenwechsel mit Hilfe derAusführungsform des Transportwagens gemäß den Fig. 21 und 22.

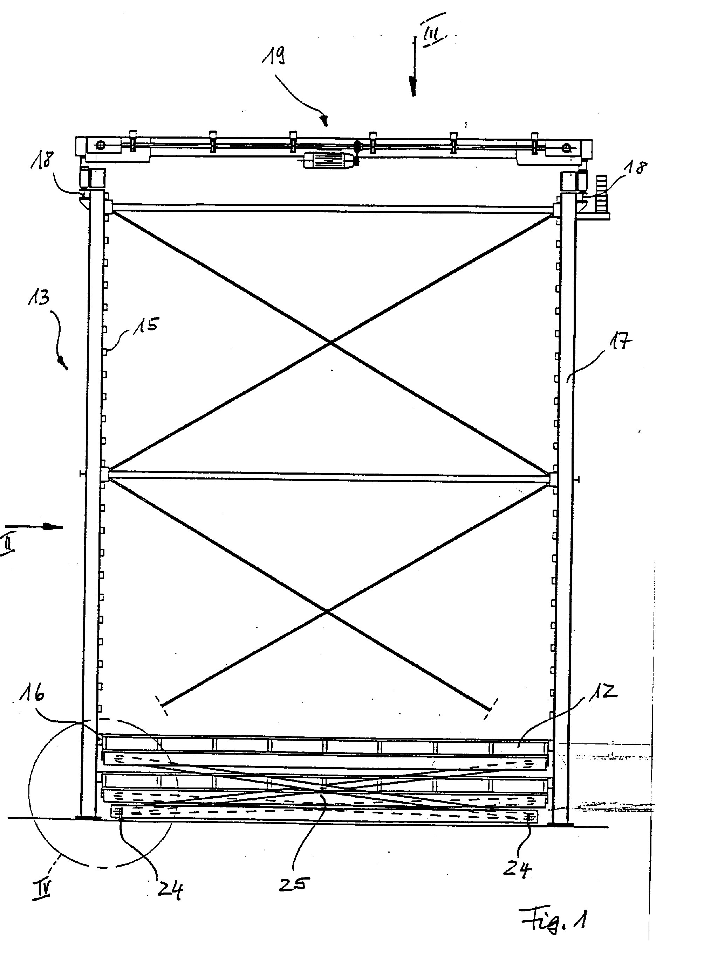

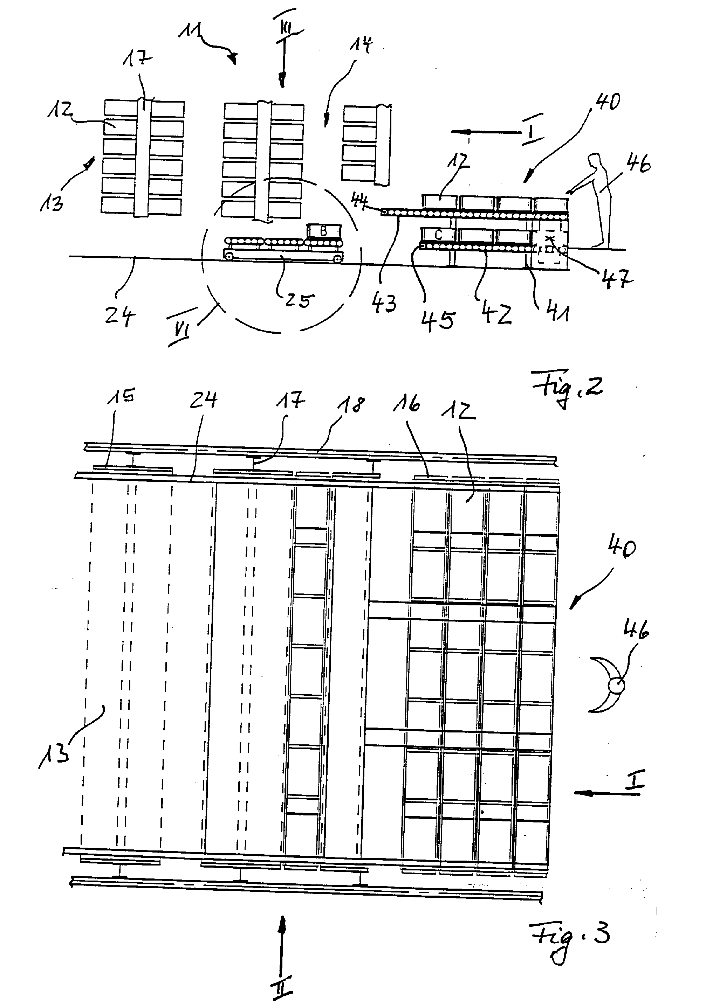

Gemäß den Fig. 1 bis 3 besteht ein Regallager 11 für stangenförmiges Material enthaltende Kassetten 12 im wesentlichen aus quer zur Längserstreckung der Kassetten 12 nebeneinander angeordneten Regalen 13, die über Regalgänge 14 voneinander getrennt sind.

Die Regale weisen sich horizontal und quer zur Materiallängsrichtung in den jeweils benachbarten Regalgang erstreckende Tragarme 15 (siehe auch Fig. 23) zur Bildung von Regalfächern für die Kassetten 12 auf, wobei die Kassetten mit stirnseitigen Auflagen 16 in Form einer U-förmigen Profilierung in Eingriff mit den Tragarmen 15 bringbar sind.

Diese Art der Kassettenlagerung und -ausbildung ist bekannt und im einzelnen beispielsweise in der DE-OS 36 02 201 beschrieben, so daß darauf hier im einzelnen nicht mehr eingegangen zu werden braucht.

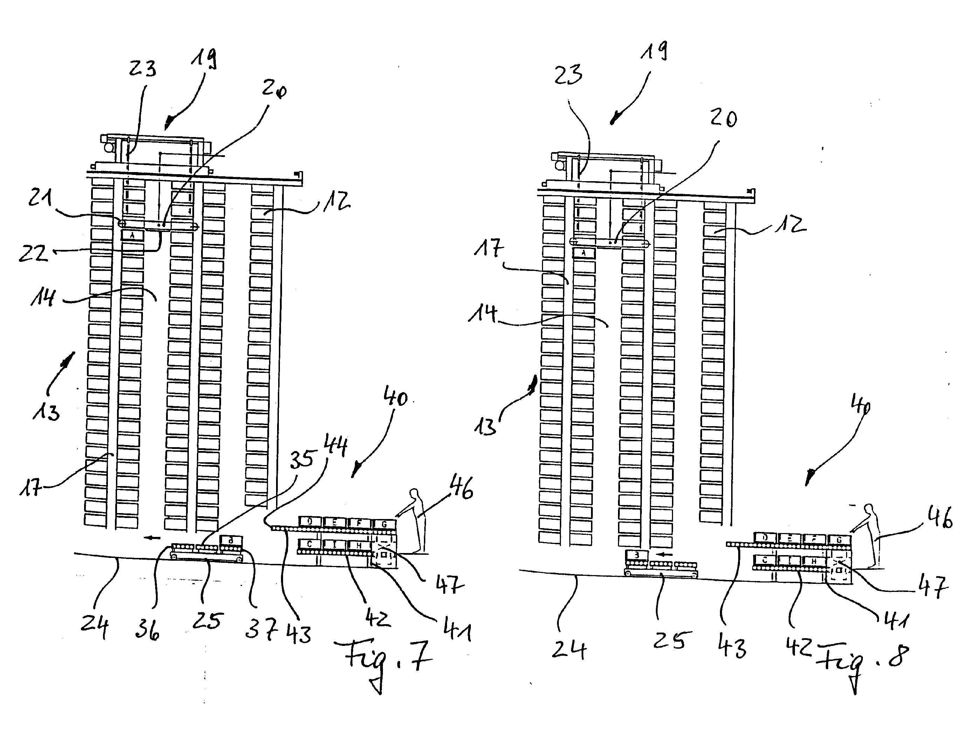

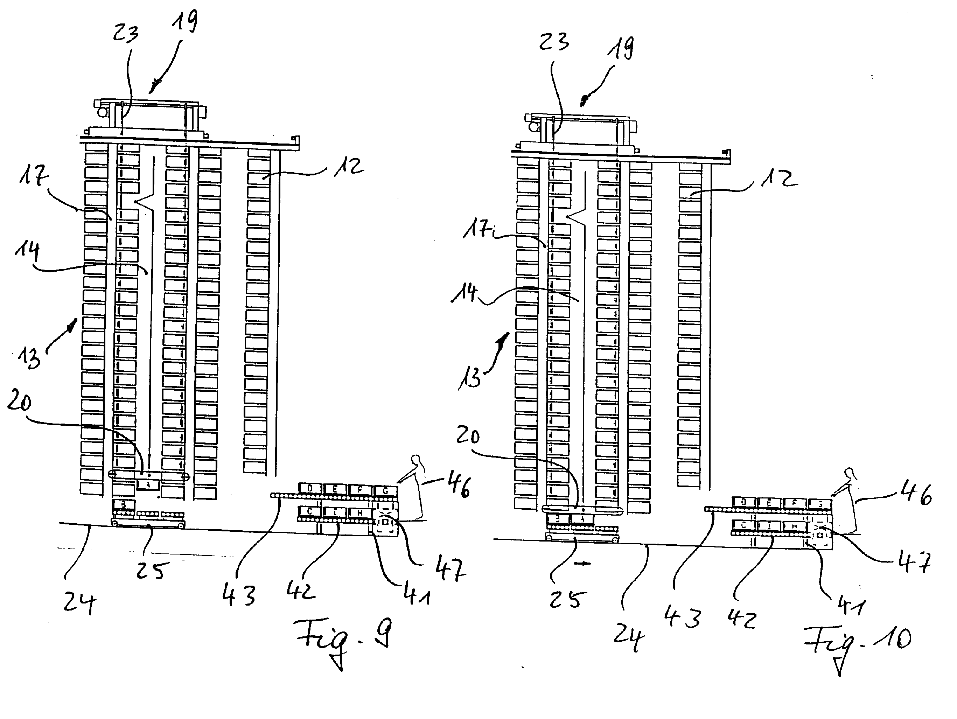

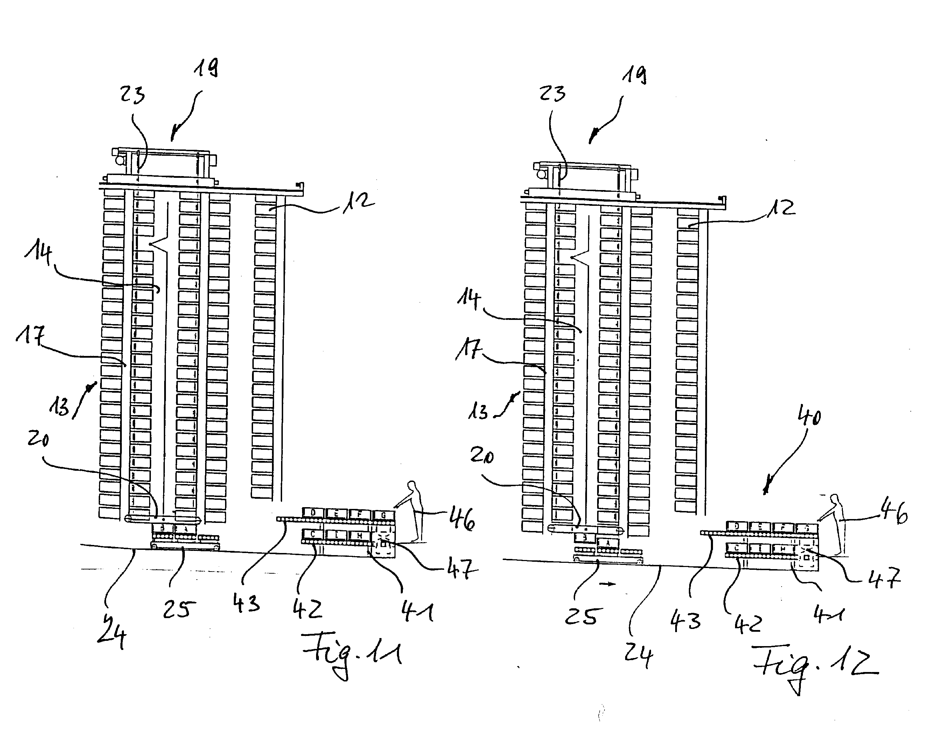

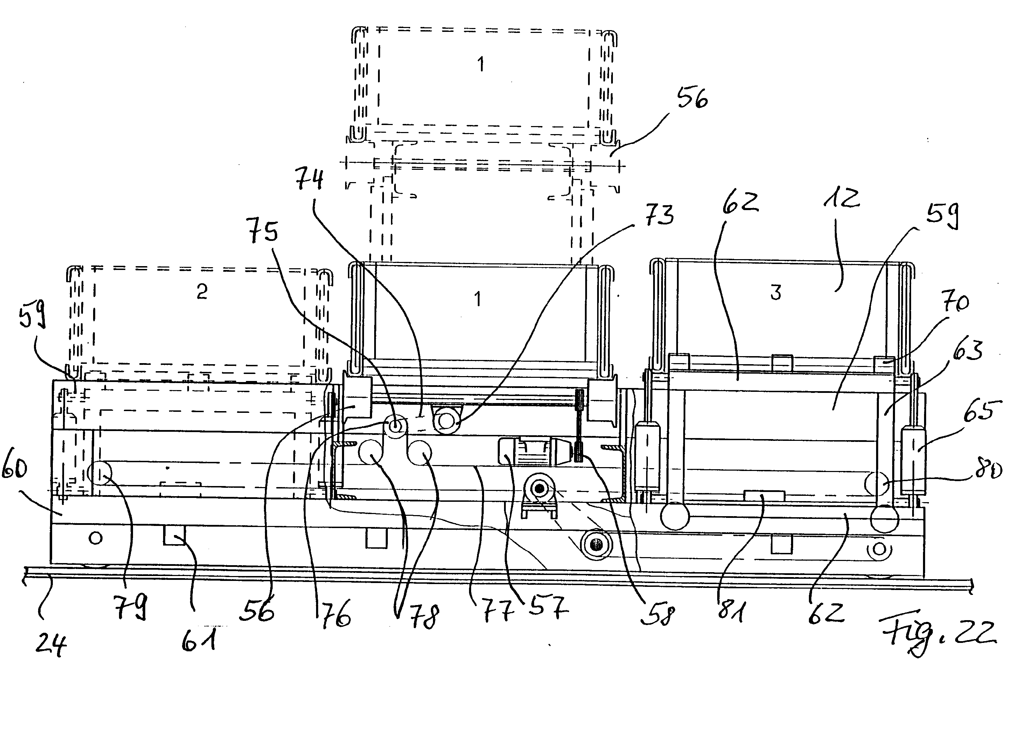

Die Tragarme 15 sind an endständigen Stützen 17 der Regale 13 befestigt, die an ihrem oberen Ende außen durch Laufschienen 18fürein Regalbediengerät 19 miteinanderverbunden sind. Dieses Regalbediengerät 19 ist im wesentlichen ein über Kopf laufender Kran mit an beiden Seiten der Regale je einem absenkbaren Lastbalken 20 (siehe Fig. 7 bis 14), wobei Lastbalken 20 über Laufrollen 21 an den Regalstützen 17 geführt sind und in ebenfalls aus der DE-OS 36 02 201 bekannten Weise gabelförmige Lastaufnahmemittel 22 tragen, die mit den Auflagen 16 der Kassetten 12 in Eingriff bringbar sind. Es versteht sich von selbst, daß die beidseits der Regale 13 angeordneten Lastbalken 20, die ausgehend vom Kran 19 über Ketten 23 heb- und senkbar sind, bezüglich ihrer Bewegungen miteinander synchronisiert sind.

Die nebeneinanderstehenden Anordnung von Regalen 13 ist entlang zwischen den Regalstützen 17 angeordneter Fahrbahn 24 quer zur Längserstreckung der Kassetten 12 durch einen Transportwagen 25 unterfahrbar, der in den Fig. 1 und 2 insgesamt in Quer- bzw. Stirnansicht dargestellt ist, dessen Einzelheiten aber eher anhand der Fig. 4 bis 6 erläutert werden können.

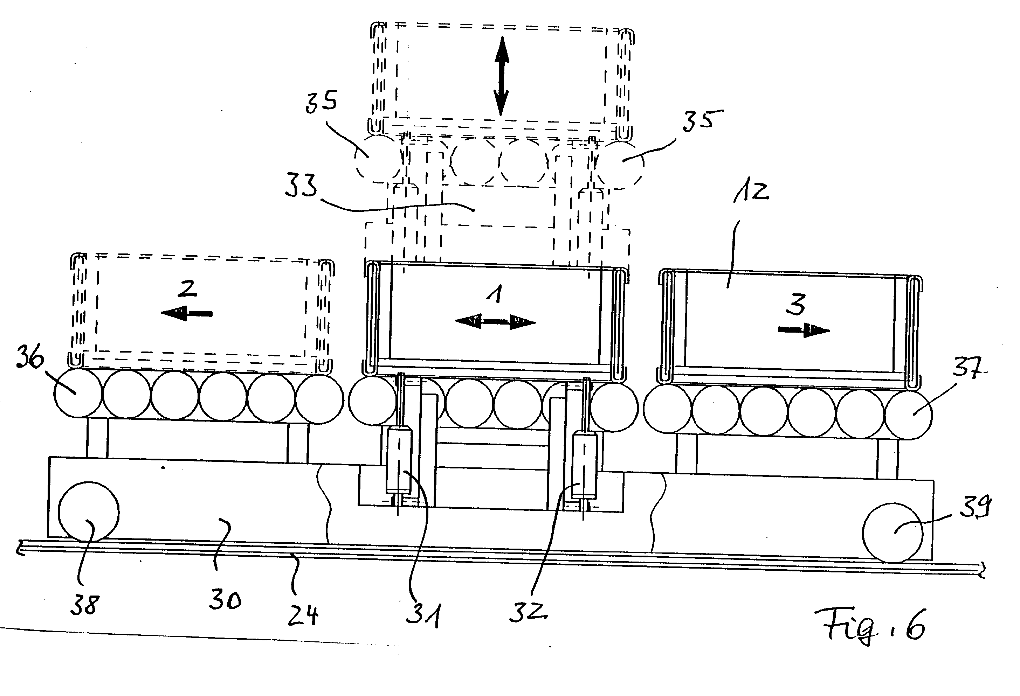

Wie aus Fig. 6 ersichtlich, hat der Transportwagen ein rahmenförmiges Fahrgestell 30, auf dem sich drei Aufnahmeplätze 1,2,3 für Kassetten 12 befinden. Dabei ist der mittlere Aufnahmeplatz zwischen zwei Ebenen heb- und senkbar mit Hilfe von beispielsweise Zylinder-Kolben-Aggregaten 31, 32, wobei der Hubbereich größer als die Höhe einer Kassette ist.

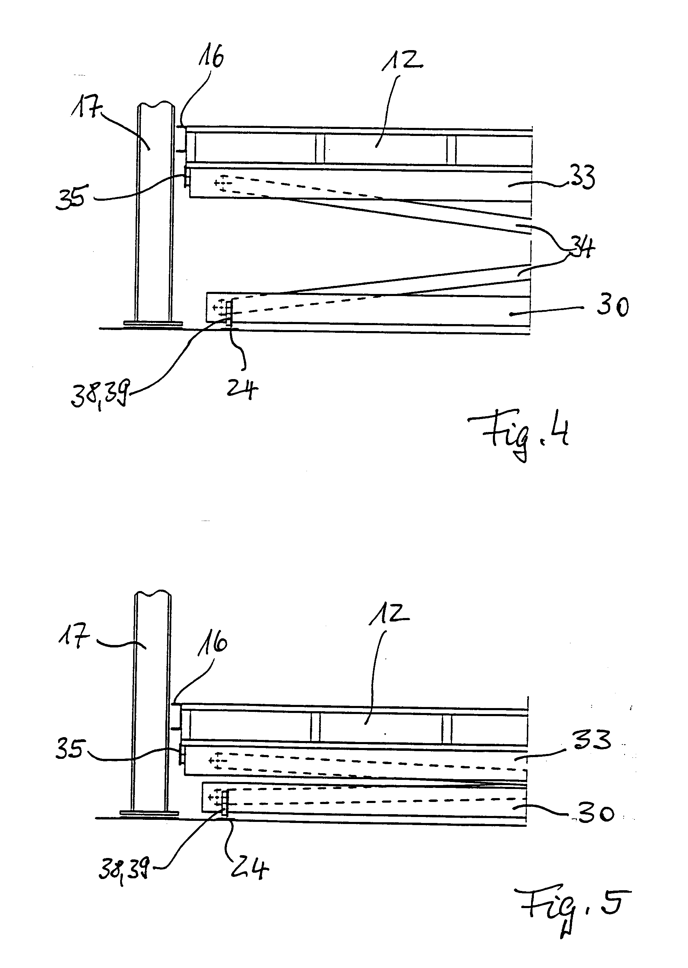

Die Fig. 4 und 5 zeigen diesen mittleren Aufnahmeplatz einmal in der angehobenen und einmal in der unteren Stellung. Dabei ist aus diesen Figuren auch ersichtlich, daß der Aufnahmeplatz im wesentlichen aus einer Aufnahme 33 gebildet ist, die gegenüber dem Grundrahmen bzw. Fahrgestell 30 über Scherenhebel 34 vertikal bewegbar ist, welche in an sich bekannter Weise durch die aus Fig. 6 ersichtlichen Zylinder-Kolben-Aggregate 31, 32 betätigbar sind.

An seinen Stirnenden trägt die Aufnahme 33 Rollen 35, über die die Kassette 12 quer zur Längserstreckung des in der Kassette enthaltenen stangenförmigen Materials verfahren werden kann. Die Rollen 35 sind in beiden Richtungen drehantreibbar.

Entsprechend haben auch die Aufnahmeplätze 2 und 3 in beiden Richtungen drehantreibbare Rollen 36, 37, so daß bei nach unten abgesenkten Scherenhebeln 34 die Kassetten 12 zwischen den Aufnahmeplätzen 1, 2 und 3 gewechselt werden können.

Aus Fig. 6 ist noch ersichtlich, wie das Fahrgestell 30 des Transportwagens über Räder 38, 39 auf den Schienen 24 verfahrbar ist.

Wie vereinfacht aus Fig. 2 ersichtlich, schließt sich nun an der quer zur Materiallängsrichtung gelegenen Stirnseite des Regallagers 11 eine insgesamt mit der Ziffer 40 versehene Station zum Ein- und Auslagern des in den Kassetten 12 enthaltenen Materials an, die durch den Transportwagen 25 anfahrbar ist. Diese Station hat zwei übereinander an einem Gestell 41 angeordnete Aufnahmeebenen 42, 43 für die Kassetten 12, wobei in diesem Falle beide Aufnahmeebenen mit in beiden Richtungen drehantreibbaren Rollenbahnen 44, 45 ausgerüstet sind, die mit den Rollen bzw. Rollenbahnen 35, 36 und 37 des Transportwagens 25 korrespondieren.

Wie aus Fig. 2 ersichtlich, ist die obere Aufnahmeebene 43 um eine Kassettenbreite in Richtung auf den Transportwagen 25 länger als die untere Aufnahmeebene 42, so daß der Transportwagen 25 mit seinem Aufnahmeplatz 3 (siehe Fig. 6) an die untere Aufnahmeebene 42 heranfahren kann, während gleichzeitig der Aufnahmeplatz 1 in seiner angehobenen Stellung zu der Aufnahmeebene 43 paßt.

Wie ferner aus Fig. 2 ersichtlich, haben die Aufnahmeebenen 42, 43 Platz für mehrere nebeneinander angeordnete Kassetten. Schließlich ist ihr einer Bedienungsperson 46 zugewandter letzter Kassettenplatz durch einen nur schematisch dargestellten Aufzug 47 gebildet, durch die Kassetten von der oberen Aufnahmeebene 43 auf die untere Aufnahmeebene 42 bzw. umgekehrt gebracht werden können.

Die Arbeitsweise dieser insgesamt dargestellten Einrichtung sei nun anhand der Fig. 7 bis 20 erläutert, wobei diese Figuren jeweils in Seitenansicht ausschnittweise ein Regallager in der Darstellung gemäß Fig. 2 zeigen.

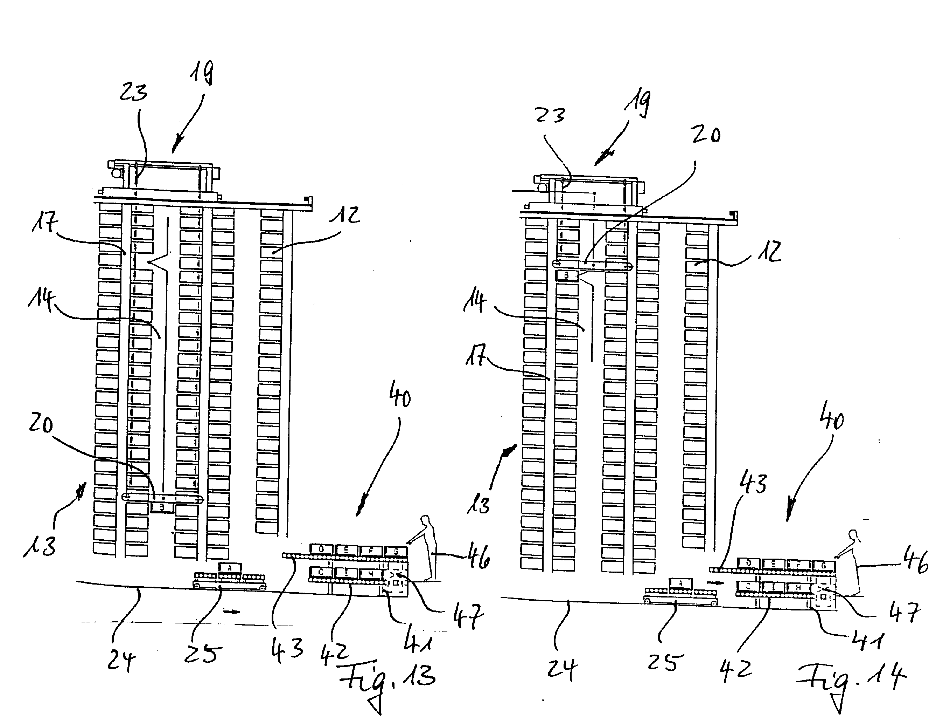

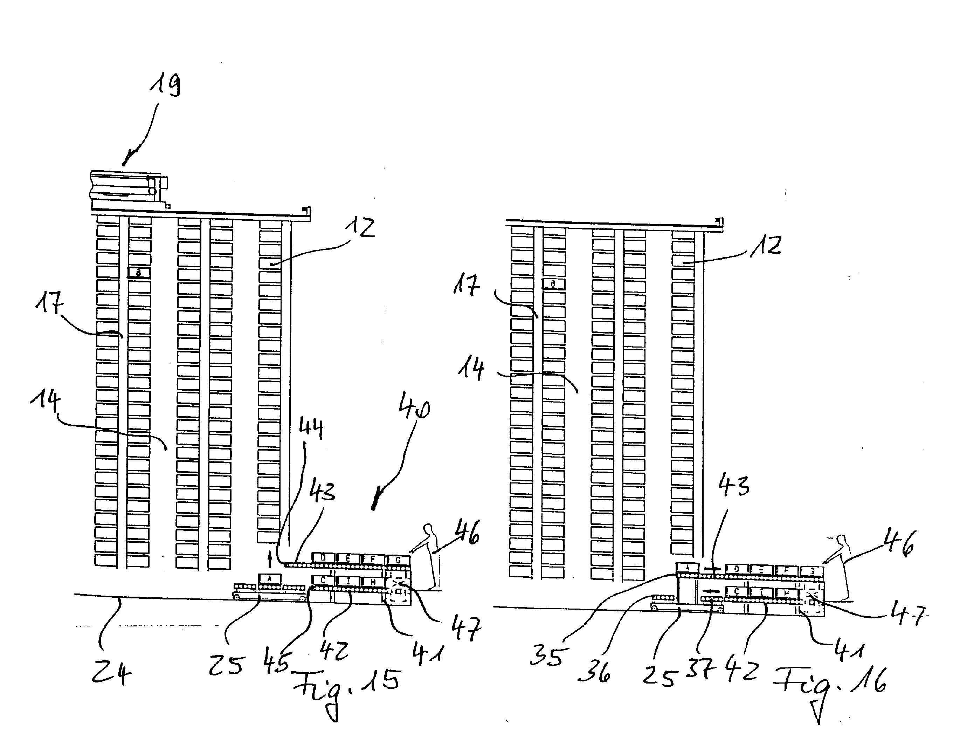

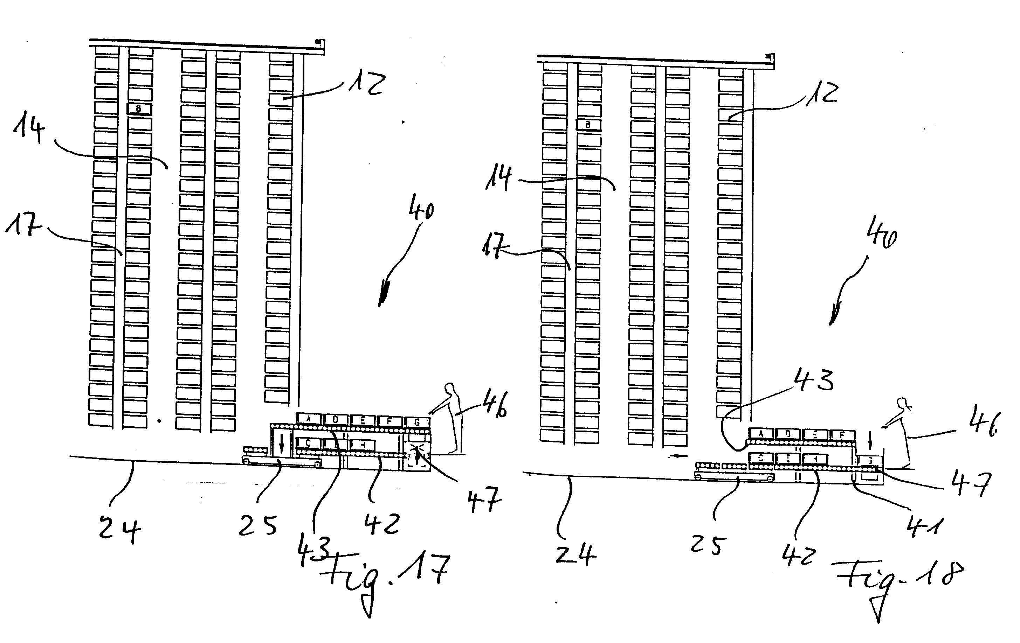

Gemäß Fig. 7 bringt der Transportwagen 25 eine Kassette B, die vorher von der unteren Aufnahmeebene 42 abgenommen wurde und auf dem Aufnahmeplatz 3 (siehe Fig. 6) des Transportwagens 25 steht, in das Regallager 11 entsprechend der angezeigten Pfeilrichtung zurück. Bei dieser Fahrbewegung wird dann, wie aus Fig. 8 ersichtlich, die Kassette B von dem (bezogen auf Fig. 6) Aufnahmeplatz 3 durch Betätigung der Rollen 35 bis 37 auf den Aufnahmeplatz 2 umgesetzt. Gleichzeitig nimmt das Regalbediengerät 19 über die Lastbalken 20 und die daran befindlichen Lastaufnahmemittel 22 eine neue Kassette A aus einem der Regale auf.

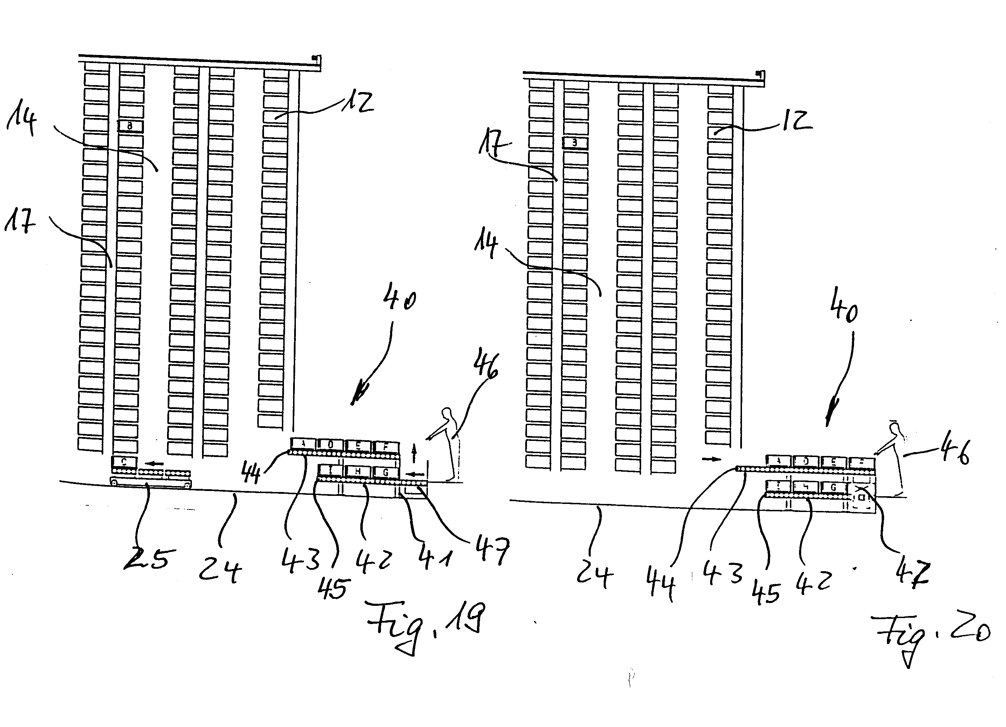

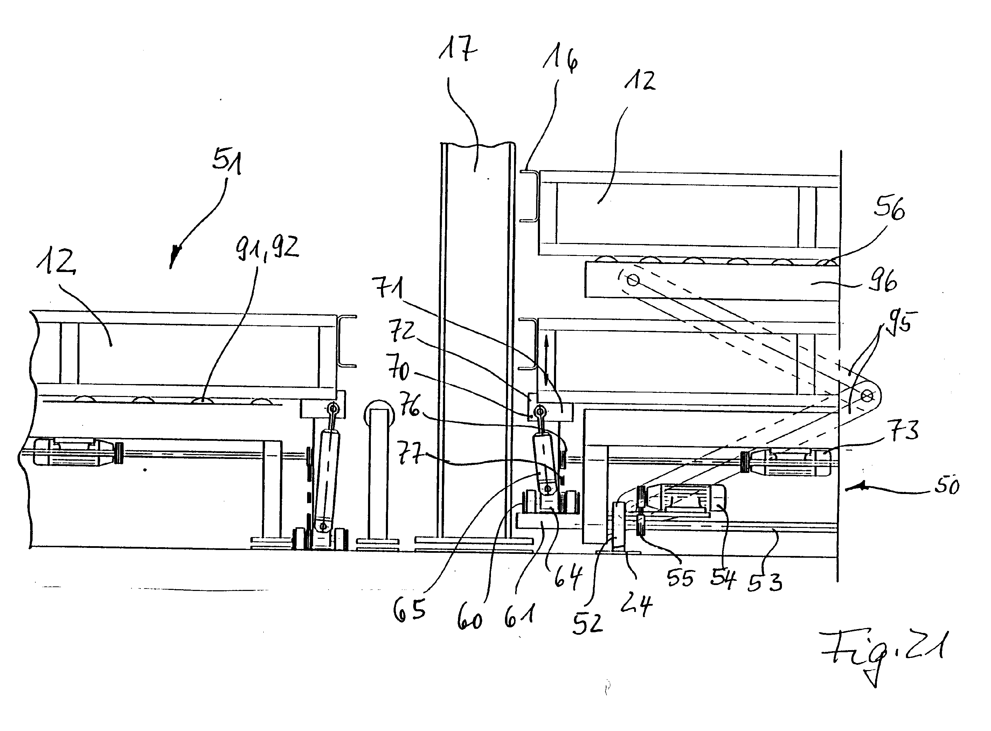

Gemäß Fig. 9 erreicht der Transportwagen 25 mit seiner mittleren Aufnahmeposition 1 das Fußende des zur Kassette A gehörenden Regalganges 14, woraufhin das Regalbediengerät 19 gemäß Fig. 10 die nächstfolgende Kassette A auf den mittleren Aufnahmeplatz 1 des Transportwagens absetzt.

Dann verfährt der Transportwagen 25 gemäß Fig. 11 um eine Kassettenbreite so, daß das Regalbediengerät die zurückzulagernde Kassette B an ihren Auflagemitteln 16 aufnehmen kann, wie dies in Fig. 12 dargestellt ist.

Nunmehr kann einerseits die zurückzulagernde Kassette B durch das Regalbediengerät 19 an den Platz zurückgebracht werden, der vorher von der Kassette A eingenommen wurde.

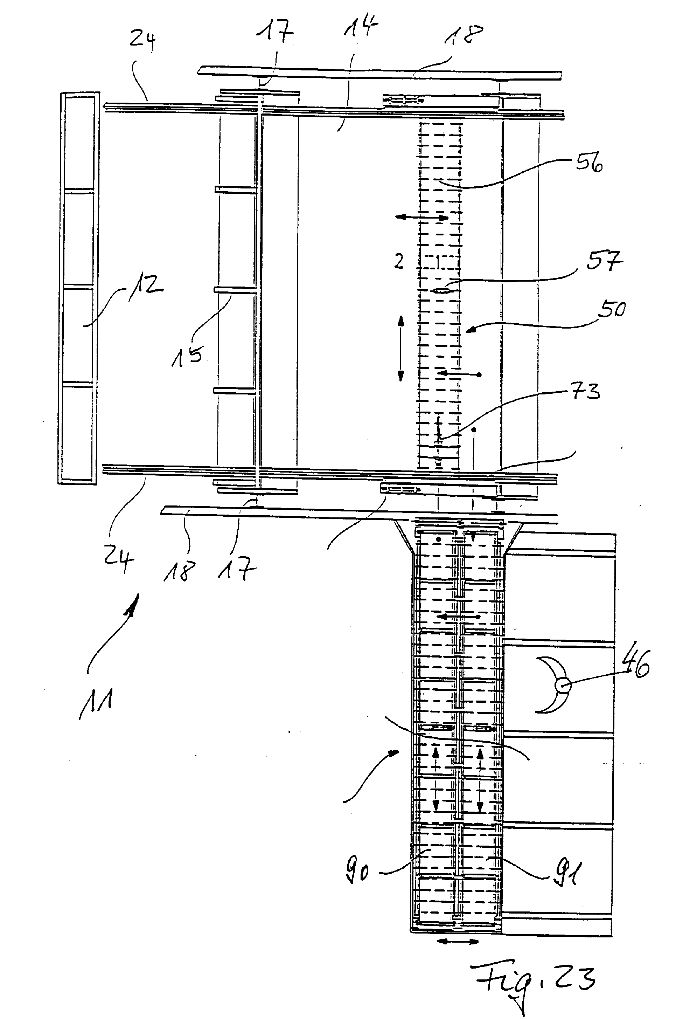

Andererseits kann der Transportwagen nunmehr mit der Kassette A zu der Station 40 fahren, wie aus Fig. 14 ersichtlich, die er dann in der aus Fig. 15 ersichtlichen Position erreicht. Dort wird gemäß Fig. 16 die Kassette A durch Betätigung der Scherenhebel 34 gemäß Fig. 4 und 5 auf das Niveau der oberen Aufnahmeebene 43 angehoben, um durch Betätigung der Rollen 35 einerseits sowie der Rollenbahn 44 andererseits vom Transportwagen auf die obere Aufnahmeebene überbracht zu werden. Gleichzeitig wird aber eine nächste, bei der Station bereits bearbeitete Kassette C von der unteren Aufnahmeebene 42 durch Betätigung der Rollenbahnen 45 sowie der Rollen 37 auf den Aufnahmeplatz 3 des Transportwagens 35 überbracht, wie dies Fig. 16 zeigt.

Nunmehr wird der Aufnahmeplatz 1 gemäß Fig. 17 wieder abgesenkt, und es kann gemäß Fig. 18 der Transportwagen für den nächsten Umlauf in das Regallager abfahren.

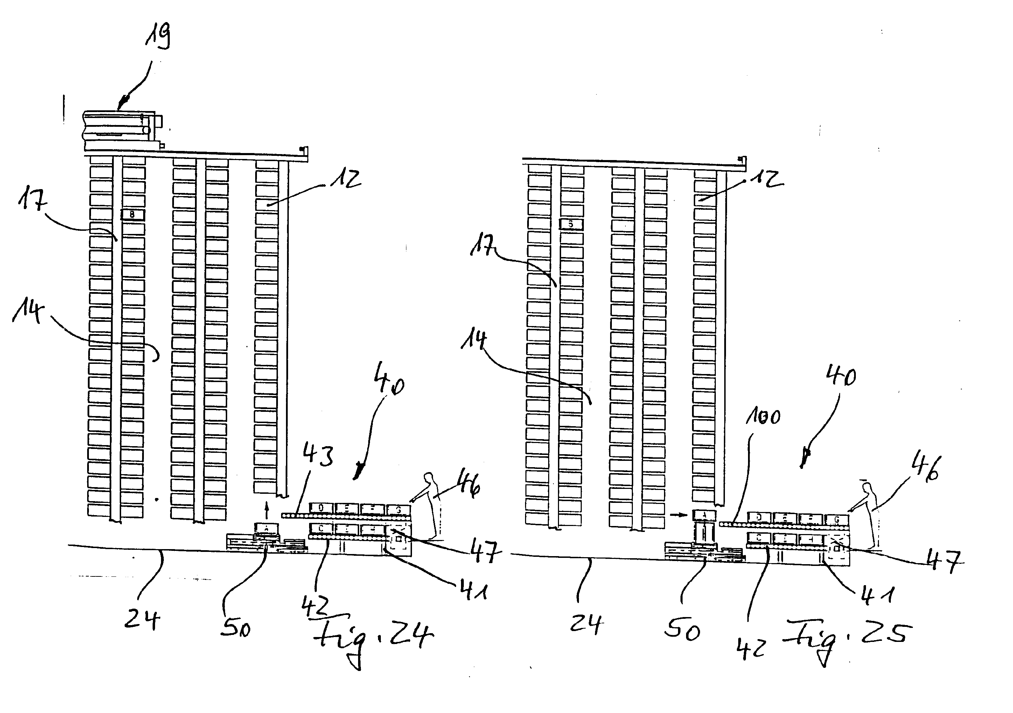

Während eines nächsten Kassettenwechsels im Bereich des Transportwagens, der in den Fig. 19 und 20 nur noch angedeutet ist, kann eine gemäß Fig. 17 ausgebrauchte Kassette G in der aus Fig. 18 ersichtlichen Weise durch den Aufzug 47 auf die untere Aufnahmeebene 42 abgesenkt werden, wie dies aus Fig. 18 ersichtlich ist. Danach wird durch Betrieb der Rollenbahn 45 die Kassette G in der aus Fig. 19 ersichtlichen Weise vom Aufzug auf die untere Aufnahmeebene heruntergenommen. Nunmehr fährt der Aufzug 47 wieder nach oben, so daß die nächstfolgenden Kassetten der oberen Aufnahmeebene durch Betrieb der Rollenbahn 44 nachgerückt werden können. Im Ergebnis steht dann gemäß Fig. 20 auf der unteren Aufnahmeebene die nächstfolgende Kassette 1 zur Rückführung in das Regallager zur Verfügung, während auf der oberen Aufnahmeebene ein Platz für die als nächstes der Station 40 zuzuführende Kassette frei ist.

Wie ersichtlich, findet also der Kassettenwechsel zwischen Transportwagen 25 und Station 40 in einem kurzen Arbeitszug statt, ohne daß dazu der Transportwagen 25 zusätzlich verfahren werden müßte. Damit entspricht dieser Kassettenwechsel nur dem kurzen Zeiteinsatz, wie er auch gemäß den Fig. 7 bis 12 innerhalb des Regallagers notwendig war.

Die bisher beschriebene Einrichtung ist abgestellt auf Regalreihen, die lediglich an ihrem quer zur Materiallängsrichtung gelegenen Stirnende mit einer Station zum Ein- und Auslagern des in den Kassetten enthaltenen Materials versehen sind.

Bei mehreren derartiger nebeneinander angeordneter Regalreihen besteht jedoch für eine äußere Regalreihe auch die an sich bekannte Möglichkeit, eine Auslagerstation neben der Regalreihe in Materiallängsrichtung anzuordnen. Um auch diesen Anwendungsfall abzudecken, ist für den Transportwagen eine Ausbildung und Arbeitsweise vorgesehen, wie sie im einzelnen anhand der Fig. 21 bis 28 nachfolgend erläutert wird.

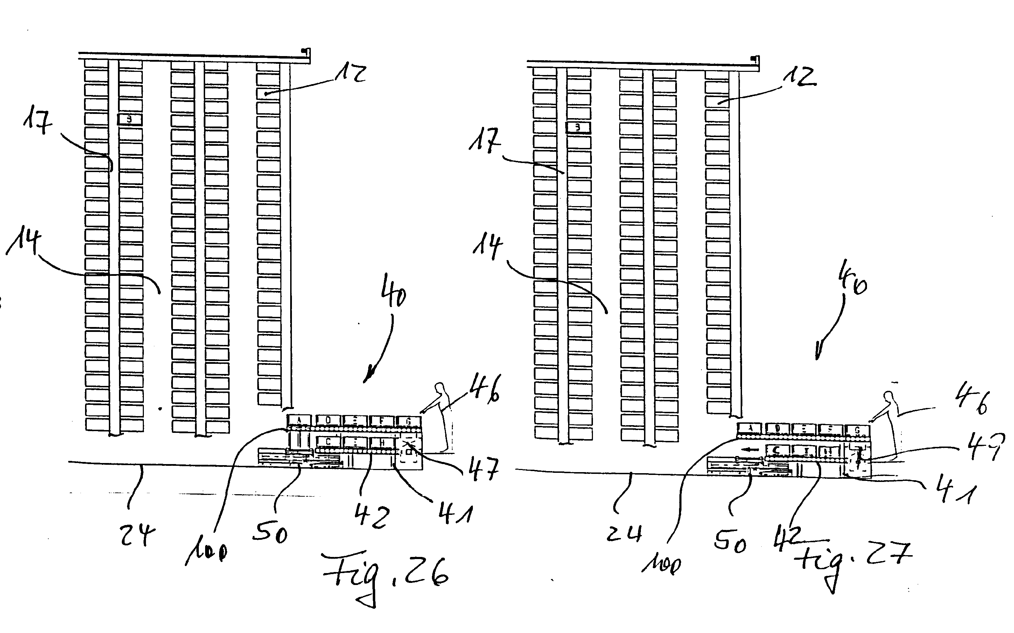

So zeigt Fig. 21 in einer der AusschnittdarsteIIung IV gemäß Fig. 1 entsprechenden Weise einen allgemein mit der Ziffer 50 versehenen Transportwagen, der mit einer Auslagerstation 51 zusammenwirken kann, die in Materiallängsrichtung neben der Regalreihe 11 angeordnet ist. (Siehe hierzu auch Fig. 23.) Hierzu ist der Transportwagen 50 in der insbesondere aus den Fig. 21 und 22 ersichtlichen Weise folgendermaßen ausgebildet:
Der Transportwagen 50 ist auf den bereits erwähnten Schienen 24 verfahrbar mit Hilfe von Rädern 52, von denen wenigstens ein Paar durch eine Welle 53 synchronisiert ist, über die auch mit Hilfe eines Motors 54 der Fahrantrieb 55 erfolgt. Genausogut könnte hier aber auch in bekannter Weise der Antrieb auf beiden Seiten des Transportwagens je durch einen eigenen Motor erfolgen, wobei die Motoren miteinander bezüglich der Fahrbewegungen synchronisiert sind.

Auf dem Transportwagen 50 sind, wie am besten aus Fig. 22 ersichtlich, quer zur Längsrichtung der Kassetten 12 drei nebeneinander angeordnete Kassettenpositionen 1, 2, 3 gebildet, wobei die mittlere Kassettenposition 1 aus einer Rollenbahn mit Rollen 56 besteht, die mit Hilfe eines Motors 57 über eine Antriebsverbindung 58 in beiden Richtungen drehantreibbar sind.

Die beiden anderen Kassettenpositionen 2 und 3 sind grundsätzlich durch eine entsprechende Aufstandsfläche des Transportwagens 50 für die Kassetten 12 gegeben, die, wie aus Fig. 21 am besten ersichtlich, durch Balken 59 quer zur Längsrichtung der Kassetten gegeben sind.

Der Transportwagen 50 weist außerdem im Bereich beider Stirnseiten der Kassetten 12 äußere Schienen 60 getragen von rahmenfesten Stegen 61 auf, über die Schlitten 62 einer Umsetzvorrichtung für die Kassetten quer zur Längserstreckung der Kassetten 12 am Transportwagen 50 verfahrbar sind. Hierbei sind die Schlitten 62 der Umsetzvorrichtung über vertikale, längenveränderbare Ständer 63 mit auf den äußeren Schienen 60 bewegbaren Fahrwerken 64 in Verbindung und über jeweils ein Zylinder-Kolben-Aggregat 65 höhenverstellbar, welches einerseits an der Oberseite des Schlittens 62 und andererseits im Bereich des jeweiligen Fahrwerks 64 schwenkbar angelenkt ist.

Wie aus den Fig. 21 und 22 ersichtlich, weisen außerdem die Schlitten 62 auf beiden Seiten den beiden Stirnseiten der jeweiligen Kassette 12 zugeordnete Stützwinkel 70 zur Auflagerung sowie Längs- und gegebenenfalls Querjustierung der jeweiligen Kassette auf, deren waagerechter Schenkel 71 die Kassette unterfängt, während ihr vertikaler Schenkel 72 die Anlage gegen die Kassettenstirnwand ist. Dabei kann zur kollisionsfreien Handhabung zweckmäßigerweise der vertikale Schenkel 72 der Stützwinkel 70 im Bereich seines oberen, freien Endes von der Kassettenstirnwand fortgeneigt bzw. abgeschrägt sein.

Wie aus der insoweit erfolgten Beschreibung der Einzelheiten des Transportwagens 50 ersichtlich, kann auf ihn jeweils eine Kassette 12 mit Hilfe der Umsetzvorrichtung (Schlitten 62) zwischen den Positionen 1, 2 und 3 hin- und hergesetzt werden, indem durch Wirkung der Zylinder-Kolben-Aggregate 65 die jeweilige Kassette angehoben und durch Antrieb der Fahrwerke 64 entlang der äußeren Schienen 60 verfahren wird. Die Fig. 21 und 22 zeigen außerdem den synchronen, hin- und hergehenden Antrieb der Schlitten 62 über einen am Transportwagen 50 befestigten Motor 73, der über eine Kette 74 eine Welle 75 treibt, über deren endständige Stirnzahnräder 76 an beiden Enden des Transportwagens eine endlose Kette 77 umläuft, die über Umlenkräder 78, 79, 80 geführt mit ihrem unteren, waagerecht durchgehenden Trum durch eine Kupplung 81 an den Schlitten 62 befestigt ist.

Wie aus Fig. 21 ersichtlich, ist im Regallager auf einer Seite außerhalb eine Auslagerstation 51 angeordnet. Diese weist, wie die Draufsicht gemäß Fig. 23 zeigt, nebeneinander zwei Plätze 90, 91 auf, die als in Längsrichtung des Materials laufende Rollenbahnen ausgebildet sind. Auf eine dieser Rollenbahnen kann der Transportwagen 50 eine Kassette 12 von seinem mittleren Aufnahmeplatz 1 abgeben, indem die Rollen 56 dieses Aufnahmeplatzes durch den Motor 57 entsprechend angetrieben werden.

Im übrigen ist aber wie auch beim Beispiel nach den Fig. 1 bis 6 der mittlere Aufnahmeplatz 1 durch Scherenhebel 95 höhenverstellbar, die einerseits an einem die Rollen 56 tragenden Rahmen 96 und andererseits am Gestell 59 des Transportwagens 50 angelenkt sind. Die Scherenhebel sind widerum beispielsweise durch ein hier nicht dargestelltes Zylinder-Kolben-Aggregat in an sich bekannter Weise betätigbar. Der Rahmen 96 hat in Materiallängsrichtung bzw. in Längsrichtung der Kassetten 12 eine verkürzte Ausdehnung, so daß die die Auflagen 16 aufweisenden Enden der Kassetten 12 frei vorstehen können. Dies zum einen deshalb, damit die Umsetzvorrichtung bildenden Schlitten 62 frei am Rahmen 96 vorbeifahren können.

Dies zum anderen aber auch, damit eine Station der bereits früher beschriebenen Art mit ihren Rollenbahnen die Kassetten aufnehmen kann.

Hierzu und zu der Arbeitsweise der Station zum Ein- und Auslagern in Verbindung mit dem anhand der Fig. 21 bis 23 erläuterten Transportwagen wird auf die Fig. 24 bis 28 verwiesen. Dabei stelle man sich vor, daß der Transportwagen in der bereits anhand der Fig. 7 bis 15 geschilderten Weise eine neue Kassette A in Richtung auf die Station zum Ein- und Auslagern gebracht hat.

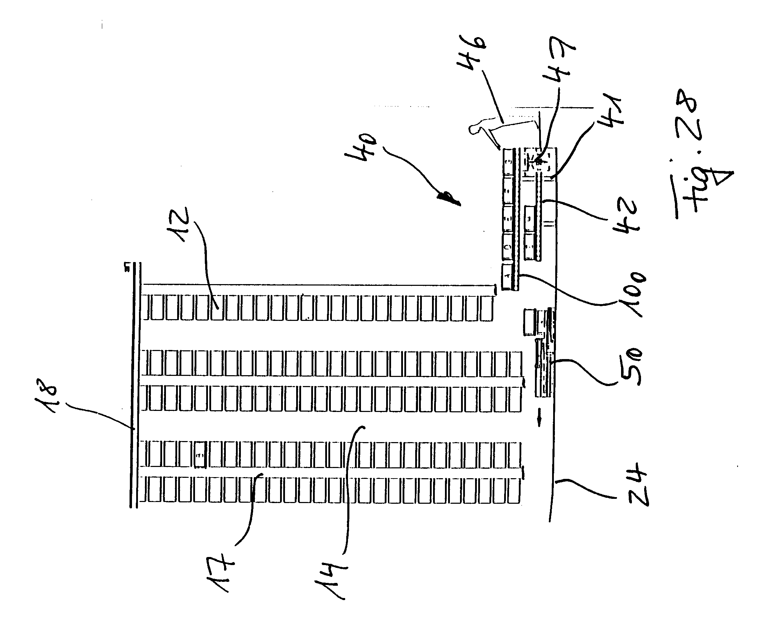

Nunmehr wird kurz vor Erreichen der Station 40 der Rahmen 96 mit der darauf befindlichen Kassette A angehoben in die aus Fig. 25 ersichtliche Position, wonach er dann in die aus Fig. 26 ersichtliche Position gefahren werden kann. Dabei ist die Ausbildung der Rollenbahn 100 der oberen Aufnahmeebene 43 zumindest an dem linken ersten Platz so getroffen, daß der Rahmen 96 zwischen die Rollen 100 einfahren kann, diese Rollen also die jeweilige Kassette nur an deren beiden Längsenden unterstützen. Mit anderen Worten ausgedrückt ist zumindest die dem Transportwagen zugewandte vordere Position der oberen Aufnahmeebene 43 der Station 40 gabelförmig in Richtung der Regale offen so ausgebildet, daß zwischen die Gabelschenkel der Rahmen 96 einfahren kann.

Ist dies nun in der aus den Fig. 25 und 26 ersichtlichen Weise geschehen, so wird durch Absenken des Rahmens 96 die Kassette Aauf die obere Aufnahmeebene 43 abgesetzt. Gleichzeitig kann die anhand der Fig. 21 und 22 beschriebene Umsetzvorrichtung von der unteren Aufnahmeebene 42 der Station 40 eine zurückzubringende Kassette C abheben, wobei hier die Rollenbahn 45 der unteren Aufnahmeebene in Materiallängsrichtung gesehen innerhalb des durch die Stützwinkel 72 eingenommenen Bereiches liegen muß. Hier müssen also die Enden der Kassetten nach außen frei über die Rollenbahn 45 vorstehen, um von der Umsetzvorrichtung bzw. deren Stützwinkel 72 erfaßt werden zu können.

Hat dann der Transportwagen 50 die Kassette C von der unteren Aufnahmeebene der Station 40 abgenommen, so geschieht der weitere Arbeitsvorgang wieder mit dem Einfahren des Transportwagens in das Regallager gemäß Fig. 28, woraufhin sich in entsprechender Weise der Arbeitsablauf gemäß Fig. 7 bis 12 anschließt nur mit dem Unterschied, daß nicht in der dortigen Weise das Umsetzen der Kassette durch auf dem Transportwagen befindliche Rollenbahnen stattfindet sondern durch die anhand der Fig. 21 und 22 beschriebene Umsetzvorrichtung.

## Patentansprüche

1. Regallager für in selbsttragenden Kassetten aufgenommenes, stangen- oder plattenförmiges Material
a) mit mehreren quer zur Materiallängsrichtung fluchtend nebeneinander angeordneten und durch Regalgänge (14) voneinander getrennten Regalen (13), die übereinander an vertikalen Regalstützen (17) befestigte, sich horizontal quer zur Materiallängsrichtung in den benachbarten Regalgang (14) erstreckende Tragarme (15) zur Bildung von Regalfächern fürdie Kassetten (12) und dazu für den Eingriff in stirnseits vorstehende Auflagen (16) der Kassetten (12) aufweisen,
b) ferner mit einem oberhalb bzw. seitlich der Regale (13) quer zur Materiallängsrichtung verfahrbaren Regalbediengerät (19), durch das die Auflagen der Kassetten (12) stirnseitig untergreifbar sowie die Kassetten (12) quer zu den Regalgängen (14) und in diesen auf- und abbewegbar sind,
c) weiterhin mit einem unterhalb der untersten Regalfächer quer zur Materiallängsrichtung verfahrbaren Transportwagen (25) mit wenigstens zwei nebeneinander angeordneten Aufnahmeplätzen (42) für die Kassetten (12),
d) sowie schließlich mit mindestens einer in Fahrtrichtung des Transportwagens (25) außerhalb der Regale (13) angeordneten und durch den Transportwagen (25) mit den Kassetten (12) anfahrbaren Station (40) zum Ein- und Auslagern für das in den Kassetten (12) enthaltene Material, wobei diese Station (40) eine erste, dem Niveau des Transportwagens (25) im wesentlichen entsprechende Aufnahmeebene (42) zum Wechsel der Kassetten (12) zwischen Transportwagen (25) und Station (40) zum Ein- und Auslagern aufweist,
dadurch gekennzeichnet,
daß die Station (40) zum Ein- und Auslagern zwei übereinander angeordnete Aufnahmeebenen (42, 43, 100) für die Kassetten (12) aufweist, wobei die untere (42) der ersten Aufnahmeebene entspricht, daß die obere Aufnahmeebene (43,100) die untere Aufnahmeebene (42) in Richtung auf den Transportwagen (25, 50) um eine Kassettenbreite überragt, daß der Transportwagen (25, 50) auf dem in seiner Fahrtrichtung gegenüber der Station zum Ein- und Auslagern zurückliegenden Aufnahmeplatz (1) eine Hubvorrichtung (33, 34) zur Anhebung der dortigen Kassette auf das Niveau der oberen Aufnahmeebene aufweist, und daß die Aufnahmeebenen sowie der Transportwagen mit Mitteln zum Wechseln der Kassetten zwischen den Aufnahmeebenen und dem Transportwagen ausgerüstet sind.

2. Regallager nach Anspruch 1,
dadurch gekennzeichnet,
daß auf den Aufnahmeebenen (42, 43, 100) der Station (40) zum Ein- und Auslagern quer zur Materiallängsrichtung mehrere Kassetten (12) aufnehmbar sind, und daß die Aufnahmeebenen Mittel zur Verschiebung der Kassetten quer zur Materiallängsrichtung aufweisen.

3. Regallager nach Anspruch 2,
dadurch gekennzeichnet,
daß die Verschiebemittel durch eine in beiden Drehrichtungen antreibbare Rollenbahn (44, 45) bzw. entsprechende Rollenbahnabschnitte gebildet sind.

4. Regallager nach Anspruch 2,
dadurch gekennzeichnet,
daß die Verschiebemittel durch eine in beiden Richtungen quer zur Materiallängsrichtung antreibbare Vorrichtung nach Art eines Kettenförderers bzw. entsprechender Kettenförderabschnitte gebildet sind.

5. Regallager nach Anspruch 2,
dadurch gekennzeichnet,
daß an dem dem Transportwagen (25, 50) abgewandten Ende der Aufnahmeebenen (42, 43, 100) der letzte Kassettenplatz durch einen beiden Ebenen gemeinsamen, vertikal fahrbaren Aufzug (47) zum Wechseln der Kassetten (12) zwischen den beiden Ebenen gebildet ist.

6. Regallager nach Anspruch 1,
dadurch gekennzeichnet,
daß die Hubvorrichtung (33, 34) des Transportwagens (25) in beiden Richtungen drehantreibbare Rollen (35) zum Kassettenwechsel zwischen Hubvorrichtung und oberer Aufnahmeebene (43) bzw. gegenüber einem benachbarten Aufnahmeplatz (2, 3) aufweist.

7. Regallager nach Anspruch 6,
dadurch gekennzeichnet,
daß die Hubvorrichtung eine im wesentlichen der Außenkontur des Aufnahmeplatzes (1) entsprechende, sich horizontal erstreckende Aufnahme (33) aufweist und daß die Aufnahme über Hubmittel (34) gegenüber dem Transportwagen (25) heb- und senkbar ist.

8. Regallager nach Anspruch 7,
dadurch gekennzeichnet,
daß die Aufnahme (33) an ihren den Längsenden der Kassetten (12) zugeordneten Enden die in beiden Drehrichtungen antreibbaren Rollen (35) zum Kassettenwechsel aufweist.

9. Regallager nach Anspruch 7 oder 8,
dadurch gekennzeichnet,
daß die Hubvorrichtung bzw. die Aufnahme (33) überverstellbare Scherenhebel (34) am Transportwagen vertikal verstellbar angelenkt ist.

10. Regallager nach Anspruch 9,
dadurch gekennzeichnet,
daß die Vertikalverstellung der Scherenhebel (34) über Zylinder-Kolben-Aggregate, Stellspindeln oder dergleichen erfolgt.

11. Regallager nach Anspruch 6,
dadurch gekennzeichnet,
daß jeder der Hubvorrichtung benachbarten Aufnahmeplätze (2, 3) des Transportwagens (25) ebenfalls in beiden Richtungen drehantreibbare Rollen (36, 37) zum Kassettenwechsel aufweist.

12. Regallager nach Anspruch 1,
dadurch gekennzeichnet,
daß auf dem Transportwagen eine quer zur Materiallängsrichtung bewegbare Umsetzvorrichtung (60 - 71) für die Anhebung und Überbringung einer auf einem Aufnahmeplatz (1, 2, 3) des Transportwagens (50) befindlichen Kassette (12) auf einen anderen Aufnahmeplatz des Transportwagens bzw. zurAbnahme einer Kassette von dem zugeordneten Ende der unteren Aufnahmeebene (42) der Station zum Ein-und Auslagern (40) auf den entsprechenden Aufnahmeplatz des Transportwagens angeordnet ist.

13. Regallager nach Anspruch 12,
dadurch gekennzeichnet,
daß die Umsetzvorrichtung (60 - 71) beiden Längsenden der Kassetten (12) zugeordnet je einen entlang äußeren Schienen (60) des Transportwagens (50) verfahrbaren Schlitten (62) zur Aufnahme einer Kassette (12) aufweist.

14. Regallager nach Anspruch 13,
dadurch gekennzeichnet,
daß jeder Schlitten (62) über vertikale, längenveränderbare Ständer (63) mit auf den äußeren Schienen (60) bewegbaren Fahrwerken (64) in Verbindung steht und über Zylinder-Kolben-Aggregate (65) höhenverstellbar ist, die einerseits am Schlitten und andererseits im Bereich der Fahrwerke schwenkbar angelenkt sind.

15. Regallager nach Anspruch 13 oder 14,
dadurch gekennzeichnet,
daß jeder Schlitten (62) den beiden Stirnseiten einer Kassette (12) zugeordnete Stützwinkel (70) zur Auflagerung und Längs- bzw. Querjustierung der Kassette aufweist, deren waagerechter Schenkel (71) die Kassette unterfängt, während ihr vertikaler Schenkel (72) in Anlage gegen die Kassettenstirn- bzw. -seitenwand ist.

16. Regallager nach Anspruch 15,
dadurch gekennzeichnet,
daß der vertikale Schenkel (72) der Stützwinkel (70) im Bereich seines freien Endes von der Kassettenstirn- bzw. -seitenwand fortgeneigt abgeschrägt ist.

17. Regallager nach Anspruch 1 mit mindestens einer in Materiallängsrichtung neben den Regalen auf der Höhe des Transportwagens angeordneten Ein- und Auslagerstation gegebenenfalls zur gleichzeitigen Aufnahme zweier nebeneinander angeordneter Kassetten,
dadurch gekennzeichnet,
daß der die Hubvorrichtung aufweisende Aufnahmeplatz (1) des Transportwagens (50) bei abgesenkter Stellung der Hubvorrichtung wirksame Mittel (56) zum Wechsel einer Kassette zwischen Ein- und Auslagerstation (90, 91) und Transportwagen (50) aufweist.

18. Regallager nach Anspruch 17,
dadurch gekennzeichnet,
daß die Mittel durch eine in beiden Richtungen drehantreibbare Rollenbahn (56) gebildet sind.

19. Regallager nach Anspruch 17 oder 18,
dadurch gekennzeichnet,
daß der die Hubvorrichtung aufweisende Aufnahmeplatz (1) des Transportwagens (50) zwischen Fördermittel der oberen Aufnahmeebene (100) einfahrbar ist, wobei die Fördermittel in Materiallängsrichtung gesehen außerhalb der Hubvorrichtung angeordnet sind.

## Claims

1. Shelf store for rod-shaped or plate-shaped material accommodated in self-supporting magazines,
a) having several shelves (13) that are arranged flush next to one another transversely to the longitudinal direction of the material and are separated from one another by shelf corridors (14) and have support arms (15) that are secured one above the other to vertical shelf supports (17) and extend horizontally and transversely to the longitudinal direction of the material into the adjacent shelf corridor (14) for the formation of shelf compartments for the magazines (12) and also for engagement in supports (16) of the magazines (12), which supports project at the end face,
b) also having a shelf service apparatus (19) that can be moved above and at the side of the shelves (13) transversely to the longitudinal direction of the material and by means of which it is possible to engage under the end faces of the supports of the magazines (12) and to move the magazines (12) up and down transversely to the shelf corridors (14) and in those corridors,
c) and also having a transport carriage (25) that can be moved underneath the lowermost shelf compartments transversely to the longitudinal direction of the material and that has at least two adjacent receiving sites (1, 2) for the magazines (12),
d) and finally having at least one station (40) for the storage and retrieval from store of the material contained in the magazines (12), which station (40) is arranged outside the shelves (13) in the direction of travel of the transport carriage (25) and can be approached by the transport carriage (25) with the magazines (12), that station (40) having a first receiving plane (42), corresponding substantially to the level of the transport carriage (25), for the exchange of magazines (12) between the transport carriage (25) and the station (40) for storage and retrieval from store,
characterised in that
the station (40) for storage and retrieval from store has two receiving planes (42, 43, 100) for the magazines (12), which receiving planes are arranged one above the other, the lower receiving plane (42) corresponding to the first receiving plane, the upper receiving plane (43, 100) projects beyond the lower receiving plane (42) in the direction towards the transport carriage (25, 50) by the width of one magazine, the transport carriage (25, 50) has, on the receiving site (1) positioned at the back in its direction of travel with respect to the station for storage and retrieval from store, a lifting device (33, 34) for lifting the magazine there to the level of the upper receiving plane, and the receiving planes and the transport carriage are equipped with means for the exchange of magazines between the receiving planes and the transport carriage.

2. Shelf store according to claim 1, characterised in that several magazines (12) can be received on the receiving planes (42, 43, 100) of the station (40) for storage and retrieval from store transversely to the longitudinal direction of the material, and the receiving planes have means for displacing the magazines transversely to the longitudinal direction of the material.

3. Shelf store according to claim 2, characterised in t hat the displacing means are formed by a roller conveyor (44, 45) or corresponding roller conveyor sections that can be driven in both directions of rotation.

4. Shelf store according to claim 2, characterised in that the displacing means are formed by a device similar to a chain conveyor or corresponding chain conveyor sections that can be driven in both directions transversely to the longitudinal direction of the material.

5. Shelf store according to claim 2, characterised in that, at the end of the receiving planes (42, 43, 100) remote from the transport carriage (25, 50), the last magazine site is formed by a vertically movable lift (47), common to both planes, for exchanging the magazines (12) between the two planes.

6. Shelf store according to claim 1, characterised in that the lifting device (33, 34) of the transport carriage (25) has rollers (35) that can be driven in rotation in both directions for magazine exchange between the lifting device and the upper receiving plane (43) or with respect to an adjacent receiving site (2, 3).

7. Shelf store according to claim 6, characterised in that the lifting device has a horizontally extending receiving member (33) that corresponds substantially to the outer shape of the receiving site (1), and the receiving member can be lifted and lowered with respect to the transport carriage (25) by lifting means (34).

8. Shelf store according to claim 7, characterised in that at its ends associated with the longitudinal ends of the magazines (12) the receiving member (33) has the rollers (35) for magazine exchange which can be driven in both directions of rotation.

9. Shelf store according to claim 7 or claim 8, characterised in that the lifting device or the receiving member (33) is articulated to the transport carriage in a vertically adjustable manner by means of adjustable scissor-type levers (34).

10. Shelf store according to claim 9, characterised in that the vertical adjustment of the scissor-type levers (34) is effected by means of cylinder-piston units, adjusting spindles or the like.

11. Shelf store according to claim 6, characterised in that each of the receiving sites (2, 3) of the transport carriage (25) adjacent to the lifting device also has rollers (36, 37) for magazine exchange that can be driven in rotation in both directions.

12. Shelf store according to claim 1, characterised in thatthere is arranged on the transport carriage a transfer device (60 - 71), movable transversely to the longitudinal direction of the material, for lifting and moving a magazine (12) located on a receiving site (1, 2, 3) of the transport carriage (50) onto another receiving site of the transport carriage or for removing a magazine from the associated end of the lower receiving plane (42) of the station (40) for storage and retrieval from store to the corresponding receiving site of the transport carriage.

13. Shelf store according to claim 12, characterised in that the transfer device (60 - 71) has, associated with the two longitudinal ends of the magazines (12), in each case one slide member (62), for receiving a magazine (12), that can be moved along outer rails (60) of the transport carriage (50).

14. Shelf store according to claim 13, characterised in that each slide member (62) is connected by vertical stands (63) that can be adjusted in length to a chassis -------(64) movable on the outer rails (60), and each slide member can be adjusted in height by means of cylinder-piston units (65) that are pivotably articulated on the one hand to the slide member and on the other hand in the region of the chassis.

15. Shelf store according to claim 13 or claim 14, characterised in that each slide member (62) has supporting angled pieces (70) associated with the two end faces of a magazine (12) for the support and longitudinal and transverse adjustment of the magazine, the horizontal leg (71) of which supporting angled pieces engages under the magazine while their vertical leg (72) is in contact with the end or side wall of the magazine.

16. Shelf store according to claim 15, characterised in thatthe vertical leg (72) of the supporting angled pieces (70) is, in the region of its free end, inclined away in sloping manner from the end or side wall of the magazine.

17. Shelf store according to claim 1 having at least one storage and retrieval station arranged adjacent to the shelves in the longitudinal direction of the material at the height of the transport carriage, optionally to receive simultaneously two magazines arranged adjacent to one another, characterised in that the receiving site (1) of the transport carriage (50) having the lifting device has, when the lifting device is in the lowered position, effective means (56) for magazine exchange between the storage and retrieval station (90, 91) and the transport carriage (50).

18. Shelf store according to claim 17, characterised in that the means are formed by a roller conveyor (56) that can be driven in rotation in both directions.

19. Shelf store according to claim 17 or claim 18, characterised in that the receiving site (1) of the transport carriage (50) having the lifting device can be inserted between conveyor means of the upper receiving plane (100), the conveyor means being arranged outside the lifting device viewed in the longitudinal direction of the material.

## Revendications

1. Entrepôt à rayonnages pour un matériau en forme de barres ou de plaques devant être logées dans des cassettes autoportantes, comportant
a) plusieurs rayonnages (13) qui sont disposés les uns à côté des autres en étant alignés transversalement par rapport à la direction longitudinale du matériau et sont séparés les uns des autres par des passages (14) et possèdent des bras de support (15), qui sont fixés les uns au-dessus des autres sur des montants verticaux (17) des rayonnages et s'étendent horizontalement transversalement par rapport à la direction longitudinale du matériau dans les passages voisins (14) du rayonnage, de manière à former des casiers de rayonnage pour les cassettes (12), et des supports (16), qui font saillie à cet effet pour un prélèvement frontal, pour les cassettes (12),
b) en outre un appareil (19) desservant les rayonnages, qui peut être déplacé au-dessus ou latéralement par rapport aux rayonnages (13) et transversalement par rapport à la direction longitudinale du matériau et qui peut s'engager frontalement au-dessous des supports des cassettes (12) et qui permet de soulever et d'abaisser les cassettes (12) transversalement par rapport aux passages (14) des rayonnages et dans ces passages,
c) en outre un chariot de transport (25) qui est déplaçable au-dessous du casier le plus bas des rayonnages transversalement par rapport à la direction longitudinale du matériau et comporte au moins deux logements de réception (1,2) disposés côte-à-côte pour les cassettes (12),
d) ainsi qu'enfin au moins un poste (40), qui est disposé dans la direction de déplacement du chariot de transfert (25) à l'extérieur des rayonnages (13) et dont le chariot de transport (25) équipé des cassettes (12) peut se rapprocher et qui sert au stockage et au déstockage du matériau contenu dans les cassettes, ce poste (40) possédant un premier plan de réception (42), dont le niveau correspond essentiellement au niveau du chariot de transport (25) pour transférer les cassettes (12) entre le chariot de transport (25) et le poste (40) de stockage et de déstockage,
caractérisé en ce
que le poste (40) de stockage et de déstockage comporte deux plans superposés de réception (42,43,44) pour les cassettes (12), le plan inférieur (42) correspondant au premier plan de réception, que le plan supérieur de réception (43,100) fait saillie au-dessus du plan inférieur de réception (42), et ce sur une largeur de cassette, en direction du chariot de transport (25,50), que le chariot de transport (25,50) possède, sur le logement de réception (1), qui est en arrière, dans la direction de déplacement du chariot par rapport au poste de stockage et de déstockage, un dispositif de levage (33,34) pour soulever la cassette placée en cet endroit de manière à l'amener au niveau du plan supérieur de réception, et que les plans de réception ainsi que le chariot de transport sont équipés de moyens pour transférer les cassettes entre les plans de réception et le chariot de transport.

2. Entrepôt à rayonnages selon la revendication 1, caractérisé en ce que dans les plans de réception (42,43,100) du poste de stockage et de déstockage (40), plusieurs cassettes peuvent être reçues transversalement par rapport à la direction longitudinale du matériau et que les plans de réception possèdent des moyens pour déplacer les cassettes transversalement par rapport à la direction longitudinale du matériau.

3. Entrepôt à rayonnages selon la revendication 2, caractérisé en ce que les moyens de déplacement sont constitués par un transporteur à rouleaux (44,45), qui peut être entraîné dans les deux sens de rotation ou par des sections correspondantes d'un transporteur à rouleaux.

4. Entrepôt à rayonnages selon la revendication 2, caractérisé en ce que les moyens de décalage sont constitués par un dispositif, qui peut être entraîné dans les deux sens transversalement par rapport à la direction longitudinale du matériau et est agencé à la manière d'un convoyeur à chaînes ou de sections correspondantes d'un convoyeur à chaînes.

5. Entrepôt à rayonnages selon la revendication 2, caractérisé en ce que sur l'extrémité des plans de réception (42,43,100), située à l'opposé du chariot de transport (25,50), le dernier logement de cassette est formé par un élévateur (47) déplaçable verticalement, qui est commun aux deux plans et sert à transférer les cassettes (12) entre les deux plans.

6. Entrepôt à rayonnages selon la revendication 1, caractérisé en ce que le dispositif de levage (33,34) du chariot de transport (25) comporte des rouleaux (35), qui peuvent être entraînés en rotation dans les deux sens et servent à réaliser le transfert des cassettes entre le dispositif de levage et le plan supérieur de réception (43) ou par rapport à un emplacement voisin de réception (2,3).

7. Entrepôt à rayonnages selon la revendication 6, caractérisé en ce que le dispositif de levage comporte un logement (33) qui correspond essentiellement au contour extérieur de l'emplacement de réception (1) et s'étend horizontalement, et que le logement peut être soulevé et abaissé par l'intermédiaire de moyens de levage (34) par rapport au chariot de transport (25).

8. Entrepôt à rayonnages selon la revendication 7, caractérisé en ce que le logement (33) comporte, sur ses extrémités associées aux extrémités longitudinales des cassettes (12), des rouleaux (35) pouvant être entraînés dans les deux sens de rotation pour le transfert des cassettes.

9. Entrepôt à rayonnages selon la revendication 7 ou 8, caractérisé en ce que le dispositif de levage ou le logement (33) est articulé de manière à être réglable verticalement sur le chariot de transport, par l'intermédiaire de leviers réglables en forme de ciseaux (34).

10. Entrepôt à rayonnages selon la revendication 9, caractérisé en ce que le réglage vertical des leviers en forme de ciseaux (34) s'effectue par l'intermédiaire d'unités à cylindre et piston, de broches de réglage ou analogues.

11. Entrepôt à rayonnages selon la revendication 6, caractérisé en ce que chacun des emplacements de réception (2,3) du chariot de transport (25), qui sont voisins du dispositif de levage, possède également des rouleaux (36,37) pouvant être entraînés en rotation dans les deux sens pour le transfert des cassettes.

12. Entrepôt à rayonnages selon la revendication 1, caractérisé en ce que sur le chariot de transport est disposé un dispositif de transbordement (60-71), qui est déplaçable transversalement par rapport à la direction longitudinale du matériau et sert à soulever et à transférer une cassette (12) située dans un logement (1,2,3) du chariot de transport (5), à un autre logement du chariot de transport ou pour retirer une cassette de l'extrémité associée du plan inférieur de réception (42) du poste de stockage et de déstockage (40), au niveau du logement correspondant du chariot de transport.

13. Entrepôt à rayonnages selon la revendication 12, caractérisé en ce que le dispositif de transbordement (60-71) comporte, d'une manière associée aux deux extrémités longitudinales des cassettes (12), respectivement un chariot (62) qui est déplaçable le long de rails extérieurs (60) du chariot de transport (5) et sert à recevoir une cassette (12).

14. Entrepôt à rayonnages selon la revendication 13, caractérisé en ce que chaque chariot (62) est raccordé, par l'intermédiaire de montants verticaux (63), dont la longueur est variable, des dispositifs de roulement (64) déplaçables sur les rails extérieurs (60), et est réglable en hauteur par l'intermédiaire des unités à cylindre et piston (65), qui sont articulées d'une part sur le coulisseau et d'autre part au niveau des dispositifs de roulement

15. Entrepôt à rayonnages selon la revendication 13 ou 14, caractérisé en ce que chaque chariot (62) comporte des cornières de support (70), qui sont associées aux deux faces frontales d'une cassette (12), pour le support et l'ajustement longitudinal ou transversal de la cassette et dont l'aile horizontale (71) s'engage au-dessous de la cassette, tandis que son aile verticale (72) s'applique contre la paroi frontale ou la paroi latérale de la cassette.

16. Entrepôt à rayonnages selon la revendication 15, caractérisé en ce que l'aile verticale (72) de la cornière de support (70) est biseautée dans la zone de son extrémité libre en étant inclinée à partir de la paroi frontale ou de la paroi latérale de la cassette.

17. Entrepôt à rayonnages selon la revendication 1 comportant au moins un poste de stockage et de déstockage, disposés, dans la direction longitudinale du matériau, à côté des rayonnages à hauteur du chariot de transport, éventuellement pour le logement simultané de deux cassettes disposées côte-à-côte, caractérisé en ce que le logement (1), qui comporte le dispositif de levage (12), du chariot de transport (50) possède des moyens (56), qui sont actifs lorsque le dispositif de levage est dans la position abaissée et qui servent à transférer une cassette entre un poste de stockage et de déstockage (90,91) et le chariot de transport (50).

18. Entrepôt à rayonnages selon la revendication 17, caractérisé en ce que les moyens sont constitués par un transporteur à rouleaux (56) pouvant être entraîné dans les deux sens.

19. Entrepôt à rayonnages selon la revendication 17 ou 18, caractérisé en ce que le logement (1), qui comporte le dispositif de levage, du chariot de transport (50) peut être introduit entre des moyens d'entraînement du plan supérieur de réception (100), les moyens d'entraînement étant disposés à l'extérieur du dispositif de levage, lorsqu'on regarde dans la direction longitudinale du matériau.
